# EUROPÄISCHE PATENTANMELDUNG

(11) **EP 1 755 066 A2**
(43) Veröffentlichungstag der Anmeldung: **21.02.2007**
(21) Anmeldenummer: 06117844.8
(22) Anmeldetag: 26.07.2006
(51) Int. Cl.: G06K 7/00, G07C 9/00

(54) **System, Erkennungsgerät, Erkennungseinheit und Verfahren zur Benutzerortung bei einem Personenbeförderungsmittel**

(30) Priorität: 03.08.2005 DE 102005036447
(71) Anmelder: ROBERT BOSCH GMBH, 70442 Stuttgart (DE)
(72) Erfinder: Gerendt, Siegfried, Hildesheim 31141 (DE)

(57) **Zusammenfassung**

Es wird ein System, ein Erkennungsgerät, eine Erkennungseinheit und ein Verfahren zur Benutzerortung bei einem Personenbeförderungsmittel, insbesondere ein Reisebus, vorgeschlagen, wobei mittels des Systems erkennbar ist, ob sich eine einzelne Erkennungseinheit innerhalb oder außerhalb des Personenbeförderungsmittels befindet.

## Beschreibung

### Stand der Technik

Die Erfindung geht aus von einem System nach der Gattung des Hauptanspruchs. Aus der deutschen Offenlegungsschrift DE 103 20 255 A1 ist ein Zugangsberechtigungssystem für Fahrzeuge bekannt, wobei ein Transpondersystem mit einer Mehrzahl von Transpondern ausgestattet ist, welche beispielsweise die Öffnung eines Kraftfahrzeuges, etwa die Heckklappe, bewirken können. Nachteilig ist hieran, dass ein vergleichsweise großer Aufwand zur Authentifizierung des Transponders bzw. derjenigen Person oder desjenigen Gegenstands betrieben werden muss, die zur Öffnung des Fahrzeuges berechtigt ist/sind.

### Vorteile der Erfindung

Das erfindungsgemäße System mit den Merkmalen des Hauptanspruchs hat dem gegenüber den Vorteil, dass ein Erkennungsgerät bzw. ein Verarbeitungsmittel lediglich eine Mehrzahl von tragbaren Erkennungseinheiten insofern erkennen muss, als eine Ortung der Erkennungseinheit derart möglich ist, ob sich die Erkennungseinheit im Inneren eines Personenbeförderungsmittels oder außerhalb des Personenbeförderungsmittels befmdet. Hierdurch kann die Signalverarbeitung bzw. der Verschlüsselungsaufwand in der Kommunikation zwischen dem Erkennungsgerät und der Erkennungseinheit erheblich reduziert werden, so dass das erfindungsgemäße System in vorteilhafter Weise besonders kostengünstig hergestellt werden kann. Bevorzugt ist ferner, dass das wenigstens eine Erkennungsgerät zur Anordnung in bzw. an einem Ein/Ausgangbereich des Personenbeförderungsmittels vorgesehen ist. Hierdurch ist es vorteilhaft besonders einfach und betriebssicher möglich, eine Benutzerortung mit Blick auf eine Erkennung, ob sich der Benutzer im Inneren oder außerhalb des Personenbeförderungsmittels aufhält, vorzunehmen. Erfindungsgemäß ist ferner bevorzugt, dass die Erkennungseinheiten als Transponder und das Erkennungsgerät als Transponderlesegerät vorgesehen ist und/oder dass die Erkennungseinheiten als Magnetkarten und das Erkennungsgerät als Magnetkartenlesegerät vorgesehen ist. Hierdurch ist es erfindungsgemäß möglich, aufbauend auf bewährten Technologien zur Identifikation bzw. Authentifizierung mit kostengünstigen Mitteln eine Benutzerortung vorzunehmen. Ferner ist erfindungsgemäß bevorzugt, dass die Erkennungseinheiten zur drahtlosen und/oder berührungslosen Wechselwirkung mit dem Erkennungsgerät vorgesehen sind. Hierdurch ist es für einen Benutzer des Personenbeförderungsmittels, d. h. insbesondere für einen Passagier eines Reisebusses, erfindungsgemäß in besonders einfacher und bequemer Weise möglich, dass das System eine Benutzerortung bezüglich eines solchen Benutzers vornimmt. Eine Erkennungseinheit in Form eines Transponders und ein Erkennungsgerät in Form eines Transponderlesegerätes realisiert hierbei sowohl eine drahtlose als auch in der Regel eine berührungslose Wechselwirkung. Eine Erkennungseinheit als Magnetkarte und ein Erkennungsgerät in Form eines Magnetkartenlesegerätes realisiert hierbei zwar eine drahtlose, nicht jedoch eine berührungslose Wechselwirkung. Erfmdungsgemäß ist es ebenfalls möglich, dass als Erkennungseinheit eine Chipkarte (Smartcard) vorgesehen ist und dass als Erkennungsgerät ein Smartcard-Lesegerät vorgesehen ist. Eine Smartcard umfasst in der Regel einen integrierten Schaltkreis mit Kontaktflächen zur Kontaktierung von Anschlußkontakten innerhalb des Smartcard-Lesegerätes. Eine derartige Wechselwirkung zwischen einer solchermaßen vorgesehenen Erkennungseinheit und einem Erkennungsgerät ist daher als drahtgebunden aufzufassen, zumindest für den Zeitraum der Kontaktierung der Anschlußflächen des in die Smartcard integrierten Mikrochips durch das Smartcard-Lesegerät. Erfindungsgemäß ist ganz besonders bevorzugt, dass das Personenbeförderungsmittel ein Reisebus ist. Es ist hierdurch insbesondere möglich, bei längeren Busreisen, insbesondere mit einer größeren Anzahl von zu transportierenden Passagieren, eine schnelle und effiziente sowie Aufwand und Nerven einsparende Leerung des Beförderungsmittels (Ausstieg der Passagiere) als auch eine schnelle und effiziente Überprüfung des Ladezustandes des Beförderungsmittels (beispielsweise vor dem Losfahren) zu realisieren.

Weitere Gegenstände der vorliegenden Erfindung sind ein Erkennungsgerät für ein erfindungsgemäßes System sowie eine Erkennungseinheit für ein erfindungsgemäßes System. Ein weiterer Gegenstand der vorliegenden Erfindung ist ein Verfahren zur Benutzerortung bei einem Personenbeförderungsmittel gemäß dem nebengeordneten Verfahrensanspruch. Hierbei ist von Vorteil, dass eine einzige Wechselwirkung zwischen einer Erkennungseinheit und einem Erkennungsgerät ausreicht, um eine Antwort auf die Frage zu erhalten, ob sich eine Erkennungseinheit und damit ein diese tragender Benutzer innerhalb oder außerhalb des Personenbeförderungsmittels befindet. Erfindungsgemäß ist bevorzug, dass einer einzelnen Erkennungseinheit zunächst ein den Benutzer der einzelnen Erkennungseinheit individualisierender Datensatz zugeordnet wird. Hierdurch ist es - etwa durch Speicherung von benutzerindividuellen Daten auf oder in der einzelnen Erkennungseinheit oder auch durch Speicherung von benutzerindividuellen Daten in dem Erkennungsgerät oder durch Speicherung solcher Daten in dem Verarbeitungsmittel - vorteilhaft möglich dass die Benutzerortung individualisiert durchgeführt wird, d.h. etwa fehlende Passagiere oder solche Passagiere, die beim Ein- oder Ausstieg keine Wechselwirkung mit dem Erkennungsgerät 20 hergestellt haben, gezielt zu suchen bzw. anzusprechen.

Ausführungsbeispiele der Erfindung sind in der Zeichnung dargestellt und in der nachfolgenden Beschreibung näher erläutert.

Es zeigen
Figur 1 eine schematische Darstellung eines Personenbeförderungsmittels mit einem erfindungsgemäßen System umfassend eine Mehrzahl von Erkennungseinheiten und wenigstens ein Erkennungsgerät und
Figuren 2 und 3 jeweils ein Beispiel für eine Erkennungseinheit und ein Erkennungsgerät.

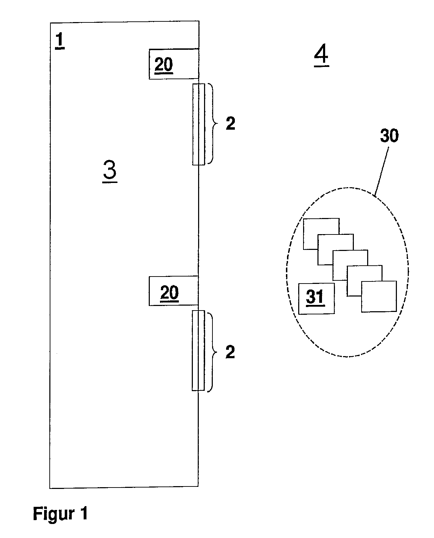

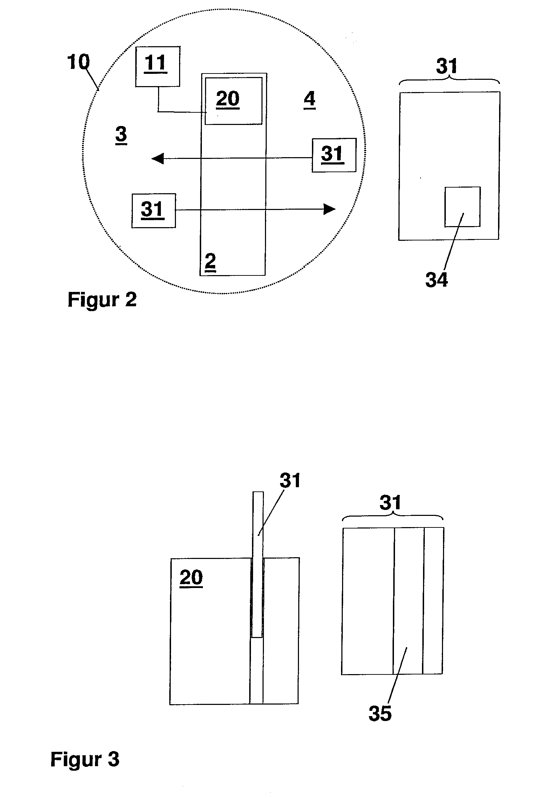

In Figur 1 ist schematisch ein Personenbeförderungsmittel 1 zusammen mit einem erfindungsgemäßen System 10 dargestellt. Das System 10 umfasst wenigstens ein Erkennungsgerät 20 und eine Mehrzahl von Erkennungseinheiten 30 (vgl. auch Figur 2). Die Erkennungseinheiten 30 sind in Figur 1 in ihrer Gesamtheit mit dem Bezugszeichen 30 bezeichnet. Nachfolgend wird aus der Mehrzahl von Erkennungseinheiten 30 eine einzelne Erkennungseinheit 31 beispielhaft ausgewählt, um die Funktionsweise des Systems zu erläutern. Diese einzelne Erkennungseinheit wird mit dem Bezugszeichen 31 bezeichnet. In der schematischen Darstellung der Figur 1 weist das Personenbeförderungsmittel 1 zwei Erkennungsgeräte 20 auf, die sich jeweils in der Nähe eines Eingangsbereichs bzw. Ausgangsbereichs des Personenbeförderungsmittels 1 befinden. Der Ein-/Ausgangsbereich des Personenbeförderungsmittels 1 ist in Figur 1 mit den Bezugszeichen 2 bezeichnet. In Figur 1 ist das Innere (Innenraum) des Personenbeförderungsmittels 1 mit dem Bezugszeichen 3 und das Äußere (Außenraum) des Personenbeförderungsmittels 1 mit dem Bezugszeichen 4 bezeichnet.

In Figur 2 ist auf der linken Seite der Figur schematisch der Ein- bzw. Ausgangsbereich 2 des Personenbeförderungsmittels 1 dargestellt. Das Personenbeförderungsmittel 1 ist erfindungsgemäß insbesondere als ein Reisebus vorgesehen und wird daher im folgenden auch als Reisebus 1 bezeichnet. Auf der linken Seite der Figur 2 ist schematisch sowohl der Fall angedeutet, dass eine einzelne Erkennungseinheit 31 vom Außenraum 4 ins Innere 3 des Reisebusses 1 verbracht wird (vgl. den nach links weisenden Pfeil in Figur 2). Weiterhin wird der Fall dargestellt, dass eine einzelne Erkennungseinheit 31 vom Inneren 3 des Reisebusses 1 in den Außenraum 4 des Reisebusses 1 verbracht wird, vgl. den nach rechts weisenden Pfeil in der Figur 2. Das Erkennungsgerät 20 ist erfindungsgemäß in der Lage, zwischen diesen beiden Bewegungsrichtungen der einzelnen Erkennungseinheit 31 zu unterscheiden und damit nach dem Durchgang eines die einzelne Erkennungseinheit 31 tragenden Benutzers des Reisebusses 1 durch den Eingangs- bzw. Ausgangsbereich des Reisebusses 1 die Feststellung zu treffen, ob die Erkennungseinheit 31 sich im Innenraum 3 oder aber im Außenraum 4 des Reisebusses befindet, wobei gleichzeitig auch eine Aussage über den Aufenthaltsort bzw. die Ortung des die Erkennungseinheit 31 tragenden Benutzers des Reisebusses 1 ermöglicht wird. In Figur 2 ist weiterhin schematisch angedeutet, dass das Erkennungsgerät 20 mit einem Verarbeitungsmittel 11 verbunden ist, welches ausgehend von den vom Erkennungsgerät 20 bei einer Wechselwirkung mit der Erkennungseinheit 31 aufgezeichneten Signale erkennt bzw. verarbeitet, dass die Erkennungseinheit 31 innerhalb oder außerhalb des Reisebusses 1 lokalisiert ist. In Figur 2 ist auf der linken Seite das erfmdungsgemäße System 10 mittels einer gestrichelten Linie zusammengefasst dargestellt. Der Fachmann erkennt, dass das Verarbeitungsmittel 11 integriert mit einem Erkennungsgerät 20 oder getrennt hiervon vorgesehen sein kann. Auf der rechten Seite der Figur 2 ist schematisch und in vergrößerter Darstellung die Erkennungseinheit 31 dargestellt, wobei mit den Bezugszeichen 34 ein Bereich der Erkennungseinheit 31 markiert ist, welcher einen sogenannten RFID-Tag (Hochfrequenzidentifikationseinheit) umfasst.

In Figur 3 ist ein Erkennungsgerät 20 in einer anderen Ausführungsform dargestellt, nämlich als ein s. g. Magentkartenlesegerät, wobei die Erkennungseinheit 31 als s. g. Magnetkarte (im linken Teil der Figur 3 mit Blickrichtung auf die Schmalseite der Karte) vorgesehen ist. Auf der rechten Seite der Figur 3 ist in vergrößerter Darstellung die Erkennungseinheit 31 als Magnetkarte mit einem Magnetstreifen 35 dargestellt. Durch das teilweise Hineinstecken bzw. Durchziehen der Erkennungseinheit 31 durch einen Schlitz des Erkennungsgeräts 20 in Form eines Magnetkartenlesegeräts ist es erfindungsgemäß möglich, dass eine Erkennung der Erkennungseinheit 31 und damit eine Erkennung des der Erkennungseinheit 31 zugeordneten Benutzers des Reisebusses 1 möglich ist. Es ist hierdurch beispielsweise möglich, dass bei einer Betätigung des Magentkartenlesegerätes 20 - beispielsweise während des Einstiegs der Reisebuspassagiere - erkannt wird, dass es sich um einen Einstieg eines bestimmten Passagiers (aus der Mehrzahl der Passagiere) in den Reisebus handelt bzw. dass es sich bei einer Betätigung des Erkennungsgerätes 20 während einer Ausstiegszeit aus dem Reisebus um einen Ausstieg des betreffenden Passagiers aus dem Reisebus handelt, so dass wiederum die Aussage getroffen werden kann, ob sich der Benutzer des Reisebusses 1 innerhalb oder außerhalb des Reisebusses 1 befmdet.

Erfindungsgemäß ist es somit vorteilhaft möglich, dass bei Busfahrten bzw. allgemein bei der Verwendung von Personenbeförderungsmitteln, bei denen eine Vielzahl von Personen befördert werden, Abzählverfahren der Reiseteilnehmer - etwa zur Überprüfung der Vollständigkeit der Passagiere vor Fahrtantritt - nicht mehr oder nur noch sehr eingeschränktem Umfang notwendig sind. Erfindungsgemäß ist es hierzu notwendig, dass jeder Benutzer des Reisebusses 1 eine Erkennungseinheit aus der Mehrzahl von Erkennungseinheiten 30 möglichst fest bei sich trägt, beispielsweise in Form eines Armbandes oder dgl. oder auch in Form einer scheckkartengroßen Plastikkarte, beispielsweise mit einem Transponder und/oder mit einem Magnetstreifen und/oder mit einem Mikrochip versehen. Bei einem Ein- oder Ausstieg aus dem Reisebus ist nun für jeden Passagier erforderlich, dass die ihm zugeordnete Erkennungseinheit in Wechselwirkung mit dem Erkennungsgerät 20 bzw. einem der Mehrzahl von Erkennungsgeräten 20 tritt. Dies kann etwa im Fall eines Magentkartenlesers und einer Magnetkarte als Erkennungsgerät 20 und Erkennungseinheit 30 dadurch geschehen, dass die Magnetkarte 31 in das Erkennungsgerät 20 hinein geschoben wird, wodurch der dieser Magnetkarte zugeordnete Passagier durch das Verarbeitungsmittel 11 als entweder eingestiegen oder ausgestiegen erkannt bzw. markiert wird. Alternativ hierzu ist es auch möglich, dass eine Smartcard in ein Smartcardlesegerät hineingeschoben wird oder es ist besonders bevorzugt möglich, dass sogar ohne eine weitere Aktion des Benutzers des Reisebusses 1, allein durch das Vorbeigehen des mit der Erkennungseinheit 31 versehenen Benutzers an dem Erkennungsgerät 20, eine Registrierung entweder des Einstiegs oder des Ausstiegs des Benutzers in den Reisebus oder aus dem Reisebus 1 von dem Erkennungsgerät 20 bzw. von dem Verarbeitungsmittel 11 erkannt wird. Hierbei umfasst das Verarbeitungsmittel 11 insbesondere einen Mikroprozessor oder ein Steuergerät. Selbst wenn ein Benutzer des Reisebusses 1 vergisst, eine Wechselwirkung zwischen den Erkennungseinheiten 30 und dem Erkennungsgerät 20 herzustellen oder aber auch, wenn die Wechselwirkung nicht ordnungsgemäß von statten geht, kann gezielt die Anwesenheit oder Abwesenheit des Benutzers des Reisebusses abgefragt werden. Dies kann beispielsweise mittels eines mündlichen Aufrufs erfolgen oder auch mittels einer Anfrage per Sprachausgabe.

Das Erkennungsgerät 20 und die Erkennungseinheiten 30 können entweder standardisiert sein, d. h. unabhängig von der jeweils getätigten Reise bzw. unabhängig von der Identität der zu befördernden Personen. In diesem Fall werden beispielsweise die Erkennungseinheiten 30 zu Beginn der Reise an die Benutzer des Reisebusses 1 ausgeteilt, so dass etwa bei Toilettenpausen oder Besichtigungspausen mittels des erfindungsgemäßen Systems und dem erfmdungsgemäßen Verfahren eine leichte Überprüfbarkeit der Anwesenheit der Passagiere in Reisebus 1 möglich ist. Am Ende der Reise werden die Erkennungseinheiten 30 dann wieder eingesammelt. Erfindungsgemäß ist es jedoch auch möglich, dass die Erkennungseinheiten 30 und das Erkennungsgerät 20 in einer gewissen Weise individualisiert programmiert werden, so dass beispielsweise die Art der Reise und/oder ihr Termin sowie die Identität des Reisenden in irgendeiner Weise mit den Daten auf der Erkennungseinheit 30 verknüpft sind, so dass z. B. eine fehlende Person gezielt angesprochen werden kann. Wenn jede der Erkennungseinheiten 30 einem Passagier eindeutig und für das Verarbeitungsmittel 11 erkennbar zugeordnet wird, ist es möglich, etwa fehlende Passagiere oder solche Passagiere, die beim Ein- oder Ausstieg keine Wechselwirkung mit dem Erkennungsgerät 20 hergestellt haben, gezielt zu suchen bzw. anzusprechen. Wenn - etwa weil in einer möglichen Ausführungsform die Erkennungseinheiten untereinander identisch vorgesehen sind - keine eindeutige Zuordnung einer der Erkennungseinheiten 30 zu einem Passagier für das Verarbeitungsmittel 11 möglich ist, kann zumindest überprüft werden, ob die Summe der Passagiere innerhalb oder außerhalb des Reisebusses die richtige ist oder sich die Anzahl der Passagiere verringert hat.

## Patentansprüche

1. System (10) mit wenigstens einem Erkennungsgerät (20) und einer Mehrzahl von tragbaren Erkennungseinheiten (30) zur Benutzerortung bei einem Personenbeförderungsmittel (1), **dadurch gekennzeichnet, dass** das wenigstens eine Erkennungsgerät (20) zur Anordnung in bzw. an dem Personenbeförderungsmittel (1) vorgesehen ist, wobei das System (10) ein Verarbeitungsmittel (11) aufweist, um hinsichtlich jeder einzelnen Erkennungseinheit (31) aus der Mehrzahl von Erkennungseinheiten (30) zu erkennen, ob sich die einzelne Erkennungseinheit (31) innerhalb des Personenbeförderungsmittels (1) befindet, oder zu erkennen, ob sich die einzelne Erkennungseinheit (31) außerhalb des Personenbeförderungsmittels (1) befmdet.

2. System (10) nach Anspruch 1, **dadurch gekennzeichnet, dass** das wenigstens eine Erkennungsgerät (20) zur Anordnung in bzw. an einem Ein-/ Ausgangsbereich (2) des Personenbeförderungsmittels (1) vorgesehen ist.

3. System (10) nach einem der vorhergehenden Ansprüche, **dadurch gekennzeichnet, dass** die Erkennungseinheiten (30) als Transponder und das Erkennungsgerät (20) als Transponderlesegerät vorgesehen ist und/oder dass die Erkennungseinheiten (30) als Magnetkarten und das Erkennungsgerät (20) als Magnetkartenlesegerät vorgesehen ist.

4. System (10) nach einem der vorhergehenden Ansprüche, **dadurch gekennzeichnet, dass** die Erkennungseinheiten (30) zur drahtlosen und/oder berührungslosen Wechselwirkung mit dem Erkennungsgerät (20) vorgesehen sind.

5. System (10) nach einem der vorhergehenden Ansprüche, **dadurch gekennzeichnet, dass** das Personenbeförderungsmittel (1) ein Reisebus ist.

6. Erkennungsgerät (20) für ein System (10) gemäß einem der vorhergehenden Ansprüche.

7. Erkennungseinheit (30) für ein System (10) gemäß einem der Ansprüche 1 bis 5.

8. Verfahren zur Benutzerortung bei einem Personenbeförderungsmittel (1) **dadurch gekennzeichnet, dass** unter Verwendung eines Systems (10) gemäß einem der Ansprüche 1 bis 5 durch eine Wechselwirkung einer einzelnen Erkennungseinheit (31) mit dem wenigstens einen Erkennungsgerät (20) erkannt wird, ob sich die einzelne Erkennungseinheit (31) innerhalb des Personenbeförderungsmittels (1) befindet oder ob sich die einzelne Erkennungseinheit (31) außerhalb des Personenbeförderungsmittels (1) befindet.

9. Verfahren nach Anspruch 8, **dadurch gekennzeichnet, dass** einer einzelnen Erkennungseinheit (31) zunächst ein den Benutzer der einzelnen Erkennungseinheit (31) individualisierender Datensatz zugeordnet wird.
